# EUROPEAN PATENT SPECIFICATION

(11) **EP 0 532 001 B1**
(45) Date of publication and mention of the grant of the patent: **04.06.1997**
(21) Application number: 92115509.9
(22) Date of filing: 10.09.1992
(51) Int. Cl.: F25B 9/00, H01F 1/00, C22C 1/00, C22C 28/00

(54) **Amorphous material for regenerator**
Amorphes Regeneratormaterial
Matériau amorphe pour régénérateur

(30) Priority: 13.09.1991 JP 263108/91
(43) Date of publication of application: 17.03.1993
(73) Proprietor: MITSUBISHI MATERIALS CORPORATION, Chiyoda-ku, Tokyo (JP); MITSUBISHI DENKI KABUSHIKI KAISHA, Tokyo (JP)
(72) Inventor: Hanaue, Yasuhiro, c/o Chuo-Kenkyusho, Mitsubishi, Omiya-shi, Saitama-ken (JP); Kimura, Etsuji, c/o Chuo-Kenkyusho, Mitsubishi, Omiya-shi, Saitama-ken (JP); Takeshita, Takuo, c/o Chuo-Kenkyusho, Mitsubishi, Omiya-shi, Saitama-ken (JP); Mizutani, Uichiro, Nagoya-shi, Aichi-ken (JP); Hoshino, Yoshiki, Niwa-gun, Aichi-ken (JP)
(74) Representative: Strehl Schübel-Hopf Groening & Partner

(56) References cited:
- EP-A- 0 191 107
- EP-A- 0 193 743
- EP-A- 0 327 293
- EP-A- 0 411 591
- FR-A- 2 283 414

## Description

### BACKGROUND OF THE INVENTION

### 1. Field of the Invention:

The present invention relates to an amorphous material which is suitable for the regenerator of a refrigerator on account of its good mechanical properties and thermal properties.

### 2. Description of the Prior Art:

Miniature-sized refrigerators are now in general use for the vacuum equipment employed in the production of semiconductors by ion implantation or sputtering. They fall into two main groups : those equipped with a regenerator and those equipped with a heat exchanger. Those belonging to the first group, which are based on the Gifford-McMahon cycle or Stirling cycle, are commonly used for refrigeration at the liquid nitrogen temperature or liquid hydrogen temperature on account of their simple structure and high reliability.

In the meantime, the material packed in the regenerator of the refrigerator is required to have a large specific heat capacity and good thermal conductivity in the range of operating temperatures. In the past, copper and lead and alloys thereof have been used as a regenerator material. They have the disadvantage of showing a rapid decrease of the specific heat capacity at 20°K or below, which presents difficulties in producing very low temperatures like that.

To solve this problem, there has been proposed a rare earth element alloy as the regenerator material which has an anomalous heat capacity due to magnetic phase transition (Japanese Patent Publication No.30473/1977). Improvements thereof have also been disclosed (Japanese Patent Laid-open Nos. 310269/1989 and 1050/1991).

The conventional rare earth alloy used as the regenerator material is an intermetallic compound having low mechanical strength. In other words, it is too brittle to be formed into a foil or coil. Therefore, it is used mostly in the form of fine powder with a particle diameter of 10µm - lmm. Fine powders of a rare earth alloy need great care in handling because of their extremely high chemical activity. In addition, excessively fine powder increases resistance to the flow of the working fluid and escapes from the net containing it.

An amorphous cold accumulating material in the form of particles of which 70 % or more have a particle size of 0.01 to 3 mm comprising at least one kind of a rare earth element in combination with Ni, Co or Cu is also disclosed in EP-A-0 411 591.

### SUMMARY OF THE INVENTION

Accordingly, a primary object of the present invention is to provide an amorphous material of a rare earth element alloy for the regenerator which is free of the above-mentioned problems involved in the prior art technology. The regenerator material in the present invention is amorphous for the improvement of its mechanical strength, so that it can be formed into a foil or coil and it maintains a large specific heat capacity over a comparatively broad range of very low temperatures.

The present invention relates to a regenerator material for a cryogenic regenerator operating at temperatures below 6K, the material being an amorphous rare earth alloy comprising one or more rare earth elements in an amount of 50-99 atomic-%, with the remainder being one or more elements selected from Ni, Co, Ru, Pd, Rh, Ir, Os, Pt and Fe,
characterised in that the material is in the form of a foil.

### BRIEF DESCRIPTION OF THE DRAWINGS

Fig. 1 is a graph showing the specific heat capacity vs. temperature of the amorphous rare earth alloys in Example 1 and 2 and the conventional rare earth alloys.

Fig. 2 is a graph showing the specific heat capacity vs. temperature of the amorphous rare earth alloy in Example 3 and the conventional rare earth alloy.

### DETAILED DESCRIPTION OF THE INVENTION

According to the present invention, the rare earth element alloy should contain rare earth elements in an amount of 50-99 atomic%. With an amount less than 50 atomic%, it has an unduly low specific heat capacity. With an amount in excess of 99 atomic%, it is not readily made amorphous. The remainder of the alloy constituents should be one or more iron family elements selected from Ni, Co, Ru, Pd, Rh, Ir, Os, Pt, and Fe. Owing to the combination of rare earth elements and iron family elements, the alloy is easily made amorphous and has a high specific heat capacity. Incidentally, less than 50% of the iron family elements may be replaced by any one or more elements selected from Au, Ag, Cu, Al, Ga, Si, and Ge, so as to improve the above-mentioned properties of the alloy.

An amorphous alloy is usually produced by the single-roll method which consists of injecting a melt of an alloy toward the surface of a roll running at a high speed, thereby subjecting the melt to rapid quenching. This single-roll method can be used to produce the amorphous rare earth alloy of the present invention. The resulting product is in the form of foil having a thickness of the order of micrometers to tens of micrometers. This foil is by far tougher than that of intermetallic compounds and can be wound up easily. Therefore, the rolled foil can be packed into the regenerator more densely, yet offering less resistance to the flow of the working fluid, than the conventional rare earth alloy in the form of powder.

In the case of conventional rare earth alloys, the anomalous heat capacity due to magnetic phase transition manifests itself as a narrow peak. By contrast, the amorphous rare earth alloy in the present invention gives a broader peak with a gentle slope. In other words, it exhibits thermal properties (specific heat capacity) most desirable for the regenerator of a refrigerator. The effect of the rare earth alloy being amorphous is significant when it is used at very low temperatures (4°K or below) in a refrigerator for helium liquefaction.

According to the present invention, the amorphous rare earth alloy for a regenerator has such a high mechanical strength that it can be formed into a foil. Therefore, it offers less resistance to the flow of the working fluid than the conventional regenerator in the form of powder. In addition, it has a large heat capacity at very low temperatures and hence produces a good cooling effect for a long period of time.

### Example 1

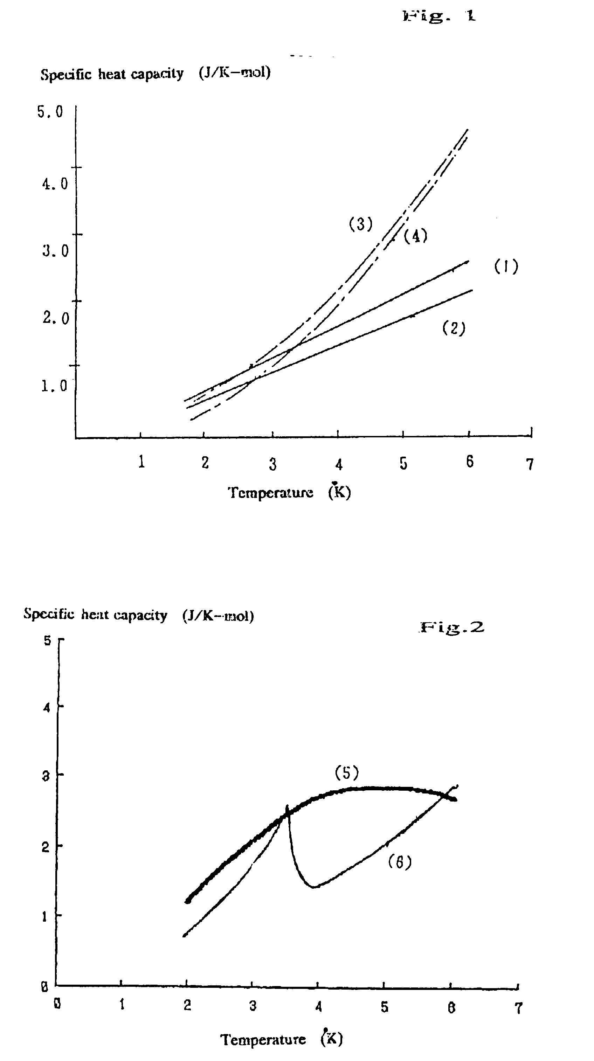

A rare earth alloy (Er₆₅Ni₃₅) composed of 65 atomic% Er and 35 atomic% Ni was prepared by melting 42 g of Er (purity 99.9%) and 7.8 g of Ni (purity 99.9%) using an argon arc melting furnace. The alloy was melted in a crucible of quartz glass by high-frequency induction heating under an argon atmosphere. The melt at about 1000°C was injected through a nozzle by the pressure of argon gas toward the surface of a steel roll rotating at about 5000 rpm, so that the melt was quenched. Thus there was obtained a foil (17 µm thick) of an amorphous rare earth alloy. The amorphousness was confirmed by X-ray diffractometry. The specific heat capacity of the foil at temperatures in the range of 1.6°K to 6°K was measured. The results are shown in Fig. 1 (solid line 1). For comparison, the specific heat capacity of a crystalline rare earth alloy (Er₃Ni + Er₃Ni₂) of the same composition (Er₆₅Ni₃₅) as above at temperatures in the same range as above was also measured. The results are also shown in Fig. 1 (chain line 3).

It is noted from Fig. 1 that the specific heat capacity of the rare earth alloy in this example is less dependent on temperature than that of the conventional crystalline rare earth alloy. At very low temperatures below 2.5°K, the former is greater than the latter. At temperatures in the range of 2.5°K to 6°K, the former remained in the range of about 0.8 to 2.5. This indicates that the amorphous rare earth alloy of the present invention exhibits good characteristics in specific heat capacity at very low temperatures like the above temperatures.

### Example 2

The same procedure as in Example 1 was repeated to prepare a rare earth alloy (Er₆₀Ni₄₀) composed of 60 atomic% Er and 40 atomic% Ni. The rare earth alloy was made into an amorphous alloy foil (22 µm thick) by heating to about 1100°C in the same manner as in Example 1. The specific heat capacity of the amorphous alloy foil at temperatures in the range of 1.6°K to 6°K was measured. The results are shown in Fig. 1 (solid line 2). For comparison, the specific heat capacity of a crystalline rare earth alloy (Er₃Ni + Er₃Ni₂) of the same composition as above at temperatures in the same range as above was also measured. The results are shown in Fig. 1 (chain line 4).

It is noted from Fig. 1 that as in the case of Example 1, the specific heat capacity of the rare earth alloy in this example is less dependent on temperature than that of the conventional crystalline rare earth alloy. At very low temperatures below 2.7°K, the former is greater than the latter. At temperatures in the range of 2.7°K to 6°K, the former remained in the range of about 1.5 to 2.0. This indicates that the amorphous rare earth alloy of the present invention exhibits good characteristics in specific heat capacity at very low temperatures like the above temperatures.

### Example 3

The same procedure as in Example 1 was repeated to prepare a rare earth alloy (Er₇₀Ru₃₀) composed of 70 atomic% Er and 30 atomic% Ru (purity 99.9%). The rare earth alloy was made into amorphous alloy foil (8 µm thick) by heating to about 1250°C in the same manner as in Example 1. The specific heat capacity of the amorphous alloy foil at temperatures in the range of 1.6°K to 6°K was measured. The results are shown in Fig. 2 (line 5). For comparison, the specific heat capacity of a crystalline rare earth alloy (Er₃Ru + Er₃Ru₂) of the same composition as above at temperatures in the same range as above was also measured. The results are shown in Fig. 2 (line 6).

It is noted from Fig. 2 that the specific heat capacity of the crystalline rare earth alloy is unstable, greatly fluctuating at temperatures in the range of 3°K to 4°K, whereas that the amorphous rare earth alloy in this example is larger than the former and stable in the same temperature range. This indicates that the amorphous rare earth alloy of the present invention exhibits good characteristics required of the regenerator.

### Example 4

The same procedure as in Example 1 was repeated to prepare several kinds of rare earth alloys each having the composition shown in Table 1. They were formed into amorphous alloy foil, and the specific heat capacity at temperatures in the range of 2°K to 6°K was measured. The results are shown in Table 1. It is noted that the amorphous rare earth alloys in this example change in specific heat capacity only a little in the specified range of temperatures. They have a large specific heat capacity at very low temperatures, which is desirable for their use as the regenerator.

**Table 1**

| Composition (molar ratio) | Thickness (µm) | Specific heat capacity(J/K-mol) | | | | |
|---|---|---|---|---|---|---|
| | | 2°K | 3°K | 4°K | 5°K | 6°K |
| 67.5Er-32.5Ni | 15 | 0.69 | 1.14 | 1.58 | 1.97 | 2.91 |
| 65Er-35Ni | 17 | 0.67 | 1.23 | 1.73 | 2.16 | 2.30 |
| 60Er-40Ni | 22 | 0.56 | 1.00 | 1.40 | 1.82 | 2.14 |
| 65Ho-35Ni | 22 | 0.68 | 0.32 | 1.08 | 1.41 | 1.79 |
| 65Dy-35Ni | 13 | 0.14 | 0.24 | 0.87 | 0.54 | 0.71 |
| 60Er-40Co | 15 | 0.34 | 0.56 | 0.82 | 1.11 | 1.37 |
| 60Ho-40Co | 13 | 0.71 | 0.64 | 0.78 | 1.01 | 1.29 |
| 70Er-30Ru | 8 | 1.06 | 2.09 | 2.70 | 2.81 | 2.60 |
| 80Dy-20Ru | 14 | 0.21 | 0.25 | 0.41 | 0.57 | 0.75 |

### Comparative Example 1

The same procedure as in Example 1 was repeated to prepare a rare earth alloy composed of 45 atomic% Er and 55 atomic% Ni, and the alloy was made into foil by injection toward the surface of a running roll. It was found by X-ray diffractometry that the crystalline phase remains in the foil. This indicates that the object of the present invention is not achieved if the content of rare earth element is less than 50 atomic%.

## Claims

1. Regenerator material for a cryogenic regenerator operating at temperatures below 6K, the material being an amorphous rare earth alloy comprising one or more rare earth elements in an amount of 50-99 atomic-%, with the remainder being one or more elements selected from Ni, Co, Ru, Pd, Rh, Ir, Os, Pt and Fe,
characterised in that the material is in the form of a foil.

2. A regenerator material as defined in claim 1, wherein the rare earth element includes one or more members selected from Er, Ho, Dy and Tb.

3. A regenerator material as defined in claim 1 or claim 2, which has a specific heat capacity in the range of 0.14 to 1.06 (J/K-mol) at 2°K and between 0.71 and 2.91 (J/K-mol) at 6°K.

4. A process for producing an amorphous rare earth alloy in the form of a foil according to any of the claims 1 to 3, which comprises quenching a melt of a rare earth alloy by injection towards the surface of a roll running at a high speed.

## Patentansprüche

1. Regeneratormaterial für einen Tieftemperatur-Regenerator, der bei Temperaturen unter 6K arbeitet, wobei das Material eine amorphe Seltenerdmetall-Legierung ist und ein oder mehrere Seltenerdmetalle in einer Menge von 50 bis 99 Atom-% enthält, wobei der Rest ein oder mehrere unter Ni, Co, Ru, Pd, Rh, Ir, Os, Pt und Fe ausgewählte Elemente sind, dadurch gekennzeichnet, daß das Material in Form einer Folie vorliegt.

2. Regeneratormaterial gemäß Anspruch 1, wobei das Seltenerdmetall ein oder mehrere unter Er, Ho, Dy und Tb ausgewählte Mitglieder umfaßt.

3. Regeneratormaterial gemäß Anspruch 1 oder 2, das eine spezifische Wärmekapazität im Bereich von 0,14 bis 1,06 (J/K-mol) bei 2°K und zwischen 0,71 und 2,91 (J/K-mol) bei 6°K aufweist.

4. Verfahren zur Herstellung einer amorphen Seltenerdmetall-Legierung in Form einer Folie gemäß einem der Ansprüche 1 bis 3, welches das Abschrecken einer Schmelze einer Seltenerdmetall-Legierung durch Spritzen dieser Schmelze auf die Oberfläche einer sich schnell drehenden Walze umfaßt.

## Revendications

1. Matériau de récupérateur pour un récupérateur cryogénique fonctionnant à des températures inférieures à 6K, le matériau étant un alliage amorphe de terres rares comprenant un ou plusieurs éléments de terres rares dans une quantité de 50-99% en atomes avec le reste étant un ou plusieurs éléments choisis parmi Ni, Cu, Ru, Pd, Rh, Ir, Os, Pt et Fe, caractérisé en ce que le matériau est dans la forme d'une feuille.

2. Matériau de récupérateur comme défini dans la revendication 1, dans lequel l'élément de terres rares comprend un ou plusieurs éléments choisis parmi Er, Ho, Dy et Tb.

3. Matériau de récupérateur selon la revendication 1 ou la revendication 2, qui a une capacité calorifique spécifique dans l'intervalle de 0,14 à 1,06 (J/K-mol) à 2K et entre 0,71 et 2,91 (J/K-mol) à 6K.

4. Procédé de production d'un alliage amorphe de terres rares dans la forme d'une feuille selon l'une quelconque des revendications 1 à 3, qui comprend la trempe d'une masse en fusion d'un alliage de terres rares par injection vers la surface d'un rouleau se déplaçant à une vitesse élevée.
